# EUROPÄISCHE PATENTANMELDUNG

(11) **EP 0 736 441 A1**
(43) Veröffentlichungstag der Anmeldung: **09.10.1996**
(21) Anmeldenummer: 96105297.4
(22) Anmeldetag: 03.04.1996
(51) Int. Cl.: B61L 25/02, G01S 5/14, G01C 21/00

(54) **Fehlertolerante Zug-Plattform**

(30) Priorität: 07.04.1995 DE 19513244
(71) Anmelder: HONEYWELL AG, D-63067 Offenbach am Main (DE)
(72) Erfinder: Schmischke, Horst, Ing., 63543 Neuberg (DE); Beyer, Jürgen, Dr. Ing., 64653 Lorsch (DE)
(74) Vertreter: Herzbach, Dieter, Dipl.-Ing.

(57) **Zusammenfassung**

Ein Meßsystem zur Ermittlung von Fahrdaten bei einem Schienenfahrzeug umfaßt neben einem Positions- und/oder Geschwindigkeitsmeßsystem (12, 16, 18, 20, 19) zusätzlich eine inertiale Navigationseinheit (14), um ein zuverlässiges redundantes Meßsystem vorzugeben, das neben Positions- und Geschwindigkeitsdaten noch weitere wichtige Meßwerte für eine Zugsteuerung zu ermitteln gestattet.

## Beschreibung

Die vorliegende Erfindung bezieht sich auf ein Zug-Meßsystem nach dem Gattungsbegriff des Patentanspruches 1.

Aus der DE 42 44 624 A1 ist ein System zum Ermitteln von Fahrdaten eines Schienenfahrzeuges bekanntgeworden, das Signale von Satelliten benutzt, um z.B. Ort und Geschwindigkeit des Schienenfahrzeuges zu ermitteln. Ein solches System, das als GPS (Global Positioning System) oder DGPS (Differential Global Positioning System) verfügbar ist, ist nur dann wirksam, wenn keine Abschattung gegenüber den Satelliten vorliegt. Da die Strecken der modernen Hochgeschwindigkeitszüge vielfach durch Tunnel verlaufen, ist ein solches System zumindest dort nicht betriebsfähig. Ferner ist das GPS vom Betreiber jederzeit abschaltbar, so daß es auch dann nicht verfügbar ist. Im übrigen kann ein solches System keine Istwerte bezüglich der Lage des Schienenfahrzeuges (Roll- und Nickwinkel) liefern.

Ausgehend von bekannten Systemen ist es die Aufgabe der vorliegenden Erfindung, diese in der Hinsicht zu verbessern, daß sie aufgrund einer vorgegebenen Redundanz allzeit betriebsbereit und zuverlässig sind und weitere für die Zugsteuerung relevante genaue Meßdaten zu liefern im Stande sind.

Die Lösung dieser Aufgabe gelingt gemäß den kennzeichnenden Merkmalen des Patentanspruches 1. Weitere vorteilhafte Ausgestaltungen des erfindungsgemäßen Zug-Meßsystems sind den abhängen Ansprüchen entnehmbar.

Anhand eines in den Figuren der beiliegenden Zeichnung dargestellten Ausführungsbeispieles sei im folgenden die Erfindung näher erläutert. Es zeigen:
Figur 1 eine Lokomotive mit dem erfindungsgemäßen Meßsystem; und
Figur 2 ein Blockschaltbild des erfindungsgemäßen Meßsystems.

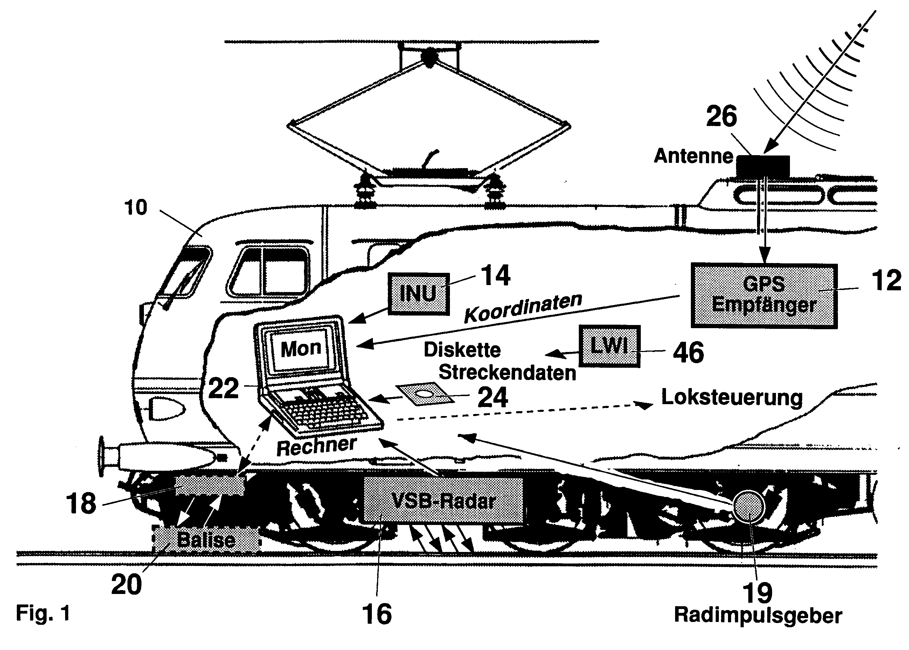

Gemäß Figur 1 umfaßt das Meßsystem auf einer Lokomotive 10 angeordnet die folgenden Einrichtungen: eine Satelliten-Empfangsanordnung (GPS) 12, eine inertiale Navigationseinheit (INU) 14, einen radunabhängigen Weg- und Geschwindigkeitssensor (vsb-Radar) 16, einen mit Balisen 20 an der Strecke zusammenwirkenden Balisenempfänger 18, einen Radimpulsgeber 19 und einen Lagewinkelindikator (LWI) 46. Alle diese Meßwertgeber 12, 14, 16, 18, 19 und 46 sind auf einen Rechner 22 geschaltet, dem beispielsweise mittels einer Diskette 24 abgespeicherte Streckendaten eingegeben werden können.

Alle verwendeten Systeme 12, 14, 16, 18, 19 und 46 sind jeweils für sich bekannt. So sei beispielsweise hinsichtlich der Verwendung einer inertialen Navigationseinheit in einem Landfahrzeug auf die Zeitschrift 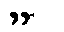 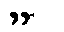 Defense Electronics"; Oktober 1985, Seiten 91 - 101 verwiesen. Ein vsb-Radar ist in der Zeitschrift 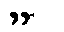 ntz", Band 31 (1978), Heft 8, auf den Seiten 581 - 583 hinsichtlich Aufbau und Wirkungsweise beschrieben. Die Stützung des Wegmeßsystems durch Balisen bzw. Radimpulsgeber sowie ein Lagewinkelindikator als vereinfachter Lagegeber sind ebenfalls im Stand der Technik bekannt, ohne daß es hierzu eines speziellen Nachweises bedarf.

Die Erfindung liegt in dem redundanten Aufbau des Zug-Meßsystems, so daß dieses auch bei Ausfall eines Teilsystems immer funktionsfähig bleibt und Fehler eines Teilsystems tolerieren und erkennen kann. Darüber hinaus ist die auf der Lokomotive 10 vorgesehene inertiale Navigationseinheit 14 in der Lage, weitere wichtige Signale zu liefern, die z.B. durch das GPS-System 12 und das vsb-Radar 16 nicht vorgegeben werden können. Eine inertiale Navigationseinheit 14 umfaßt pro Achse einen Kreisel und Beschleunigungssensor, so daß durch Erfassung der Drehbewegung in den drei Achsen und der translatorischen Bewegung neben dem Nick-, Roll- und dem Kurswinkel, durch einfache oder zweifache Integration der Beschleunigungswerte auch Geschwindigkeit und Position ermittelt werden können. Somit kann an einer bestimmten Position der Strecke die Steigung, Neigung (Überhöhung) und über die Position der Radius der Kurve aus einer Datenbank ermittelt werden. Hierdurch eignet sich das mit einer inertialen Navigationseinheit 14 ausgestattete Zug-Meßsystem in hervorragender Weise auch für die Regelung der Wagenkastenneigung in mit einer Neigungsregelung ausgestatteten Zügen. Andererseits kann die Steigung bzw. das Gefälle eine wichtige Führungsgröße für die Traktions- oder Bremsregelung eines Zugverbandes bilden. Aus der Kurswinkeländerung kann der Steckenradius ermittelt werden, der ebenfalls zur Geschwindigkeitssteuerung herangezogen wird.

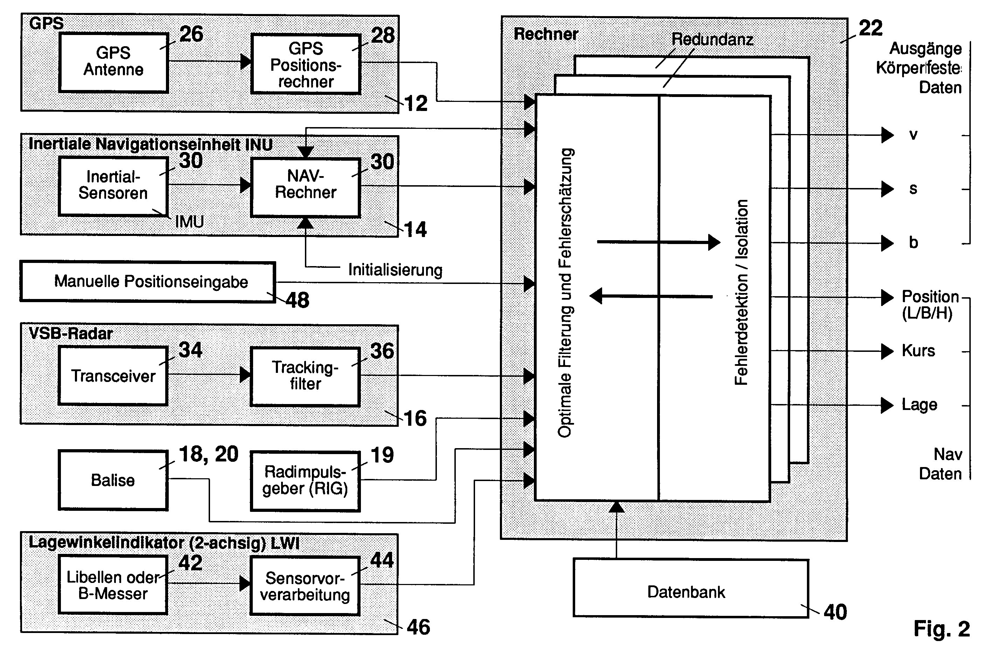

Gemäß Figur 2 umfaßt der GPS-Empfänger 12 eine GPS-Empfangsantenne 26, deren Signale einem GPS-Positionsrechner 28 zugeführt werden. Mit einer vorgegebenen Zeitbasis kann der nachgeschaltete Rechner 22 auch Werte für die Geschwindigkeit und die Beschleunigung berechnen.

Die inertiale Navigationseinheit 14 umfaßt ein Packet 30 von Inertialsensoren und einen Navigationsrechner 32, der insbesondere in einem Strap-Down-System erforderlich ist, um die Lagewinkel und die Daten für Weg, Geschwindigkeit und Beschleunigung zu ermitteln. Der Navigationsrechner 32 der inertialen Navigationseinheit 14 kann hierbei durch die von dem GPS-Rechner 28 ermittelten Werte von dem Rechner 22 her gestützt werden. Ferner kann über eine manuelle Positionseingabe 48 z.B. mit den in einem Bahnhof bekannten Positionsdaten eine Stützung erfolgen.

Das vsb-Radar 16 umfaßt einen im Gigahertz-Bereich arbeitenden Sender/Empfänger 34 und ein die Doppler-Frequenzverschiebung messendes Filter 36. Auch die Werte des vsb-Radars 16 können benutzt werden, um den Navigationsrechner 32 der inertialen Navigationseinheit 14 zu stützen.

Ferner können noch die von der Balise 20 und dem Balisenempfänger 18 bzw. von dem Radimpulsgeber 19 gelieferten Positionsdaten benutzt werden, um den Navigationsrechner 32 zu stützen.

Schließlich kann noch ein Lagewinkelindikator (LWI) 46 angeordnet werden, der bei einem Ausfall der inertialen Navigationseinheit 14 Roll- und Lagewinkel mittels Libelle oder Beschleunigungsmesser 42 und einer nachgeschalteten Sensor-Vorverarbeitung 44 zu ermitteln gestattet.

Alle durch die Systeme 12, 14, 16, 18, 19 und 46 gelieferten Meßwerte werden dem Rechner 22 zugeführt, der die Werte in drei Rechenebenen 38, 38' und 38'' speichert und verrechnet, und die vorliegenden Einzelergebnisse einer Plausibilitätsprüfung unterzieht, um beim Ausfall eines Systems dieses abzuschalten und mit den restlichen Systemen weiter zu rechnen. Der Rechner 22 arbeitet hierbei mit einer Datenbank 40 zusammen.

Durch die redundant vorhandene Information der Sensoren lassen sich dominante Fehler in einem Filter, das in dem Rechner 22 verwirklicht ist, mitschätzen und die entsprechenden Sensoren so kalibrieren. Möglich wird dadurch die Steigerung der Genauigkeit bzw. die Verwendung von weniger genauen und dafür aber preisgünstigeren Sensoren.

Die Signale der Sensoren werden durch eingebaute Tests (BIT = Built in Test) einer Plausibilitätsüberprüfung unterzogen und durch Verfahren analytischer Redundanz überwacht. Durch die Anwendung eines in dem Rechner 22 ebenfalls verwirklichten Verfahrens zur Fehlerdetektion und Fehlerisolation lassen sich fehlerhatte Sensoren erkennen und wie vorstehend erwähnt abschalten.

Was die optimale Filterung und Fehlerschätzung sowie Fehlerdetektion und Isolation anbelangt, so sei auf die Dissertation von J. Beyer 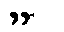 Nichtlineare Schätzung inertialer Navigationsgrößen durch die fehlertolerante Verarbeitung zusätzlicher Stützinformation" am Fachbereich Maschinenbau der Technischen Hochschule Darmstadt aus dem Jahr 1993, Seiten 95 - 139 verwiesen.

Die von dem Rechner 22 ausgegebenen fehlertoleranten Signale bezüglich Kurs, Lage, Position, Weg, Geschwindigkeit und Beschleunigung können für vielfältige Aufgaben wie eine automatische Zugsteuerung, eine Anfahr- und Bremssteuerung (AFB), eine Neigungsregelung der Wagenkasten, usw. herangezogen werden.

## Patentansprüche

1. Meßsystem zur Ermittlung von Fahrdaten bei einem Schienenfahrzeug, **dadurch gekennzeichnet,** daß neben einem Positions- und/oder Geschwindigkeitsmeßsystem (12, 16, 18, 20, 19) zusätzlich eine inertiale Navigationseinheit (14) angeordnet ist.

2. Meßsystem nach Anspruch 1, **dadurch gekennzeichnet,** daß als Positions- und Geschwindigkeitsmeßsystem wenigstens eines von folgenden Systemen vorgesehen ist:
ein GPS-System (12), oder
ein vsb-Radar (16), oder
ein Radimpulsgeber (19).

3. Meßsystem nach Anspruch 1, **gekennzeichnet durch** einen Balisenempfänger (18) als Positionsmeßsystem.

4. Meßsystem nach Anspruch 1, **gekennzeichnet durch** eine Einrichtung (48) zur manuellen Positionseingabe.

5. Meßsystem nach Anspruch 1, **gekennzeichnet durch** einen Lagewinkelindikator (46) als komplementär redundante Einheit für die Lagebestimmung der inertialen Navigationseinheit (14).

6. Meßsystem nach Anspruch 1 oder einem der folgenden Ansprüche, **gekennzeichnet durch** einen Rechner (22), dem die Meßergebnisse der einzelnen Systeme (12, 14, 16, 18, 19, 46) zugeführt werden, um durch Filterung und Fehlerschätzung und nachfolgende Fehlerdetektion und Isolation eine Plausibilitätsprüfung der Einzelergebnisse durchzuführen und bei Ausfall eines Systems dieses abzuschalten und mit dem (den) verbleibenden System(en) weiter zu rechnen.
